# EUROPÄISCHE PATENTSCHRIFT

(11) **EP 1 943 806 B1**
(45) Veröffentlichungstag und Bekanntmachung des Hinweises auf die Patenterteilung: **25.03.2009**
(21) Anmeldenummer: 06807684.3
(22) Anmeldetag: 31.10.2006
(51) Int. Cl.: H04L 29/06

(54) **TEILNEHMERSPEZIFISCHES ERZWINGEN VON PROXY-MOBILE-IP (PMIP) ANSTELLE VON CLIENT-MOBILE-IP (CMIP)**
SUBSCRIBER-SPECIFIC ENFORCEMENT OF PROXY-MOBILE-IP (PMIP) INSTEAD OF CLIENT-MOBILE-IP (CMIP)
FORÇAGE DU PROXY MOBILE IP (PMIP) A LA PLACE DU CLIENT MOBILE IP (CMIP) DE MANIERE SPECIFIQUE A L'ABONNE

(30) Priorität: 04.11.2005 DE 102005052715; 28.03.2006 DE 102006014350
(43) Veröffentlichungstag der Anmeldung: 16.07.2008
(73) Patentinhaber: SIEMENS AKTIENGESELLSCHAFT, 80333 München (DE)
(72) Erfinder: FALK, Rainer, 85386 Eching (DE); GÜNTHER, Christian, 85579 Neubiberg (DE); KRÖSELBERG, Dirk, 80469 München (DE)
(86) Internationale Anmeldenummer: PCT/EP2006/067965
(87) Internationale Veröffentlichungsnummer: WO 2007/051793

(56) Entgegenhaltungen:
- US-A1- 2004 213 260
- MADJID NAKHJIRI NARAYANAN VENKITARAMAN MOTOROLA LABS: "EAP based Proxy Mobile IP key bootstrapping for WiMAX" IETF STANDARD-WORKING-DRAFT, INTERNET ENGINEERING TASK FORCE, IETF, CH, Januar 2005 (2005-01), XP015044434 ISSN: 0000-0004
- MADJID NAKHJIRI MOTOROLA LABS KUNTAL CHOWDHURY STARENT NETWORKS AVI LIOR BRIDGEWATER SYSTEMS KENT LEUNG CISCO SYSTEMS OCTOBER 2005: "RADIUS Mobile IPv4 extensions" IETF STANDARD-WORKING-DRAFT, INTERNET ENGINEERING TASK FORCE, IETF, CH, Nr. 2, Oktober 2005 (2005-10), XP015042928 ISSN: 0000-0004
- WIMAX FROUM: "WiMAX End-to-End Network Systems Architecture (Stage 3: WiMAX - 3GPP Interworking)" WIMAX END-TO-END NERTWORK SYSTEMS ARCHITECTURE, 8. August 2006 (2006-08-08), Seiten 1-6, XP002418820

## Beschreibung

Die Erfindung betrifft ein Verfahren und einen Authentisierungsserver zum teilnehmerspezifischen Aktivieren eines netzbasierten Mobilitätsmanagements, insbesondere bei WiMax-Netzen.

Das Internet mit dem TCP/IP-Protokoll bietet eine Plattform für die Entwicklung höherer Protokolle für den mobilen Bereich. Da die Internet-Protokolle weit verbreitet sind, kann mit entsprechenden Protokollerweiterungen für mobile Umgebungen ein großer Anwenderkreis erschlossen werden. Die herkömmlichen Internet-Protokolle sind jedoch ursprünglich nicht für den mobilen Einsatz konzipiert. In der Paketvermittlung des herkömmlichen Internets werden die Pakete zwischen stationären Rechnern ausgetauscht, die weder ihre Netzwerkadresse ändern noch zwischen verschiedenen Subnetzen wandern. Bei Funknetzen mit mobilen Rechnern, werden mobile Rechner MS häufig in verschiedene Netzwerke eingebunden. Das DHCP (Dynamic Host Configuration Protocol) ermöglicht mit Hilfe eines entsprechenden Servers die dynamische Zuweisung einer IP-Adresse und weitere Konfigurationsparameter an einen Rechner in einem Netzwerk. Ein Rechner, der in ein Netzwerk eingebunden wird, bekommt automatisch eine freie IP-Adresse durch das DHCP-Protokoll zugewiesen. Hat ein mobiler Rechner DHCP installiert, muss er lediglich in Rechweite eines lokalen Netzwerkes kommen, das die Konfiguration über das DHCP-Protokoll unterstützt. Bei dem DHCP-Protokoll ist eine dynamische Adressvergabe möglich, d.h. eine freie IP-Adresse wird automatisch für eine bestimmte Zeit zugeteilt. Nach Ablauf dieser Zeit muss die Anfrage durch den mobilen Rechner entweder erneut gestellt werden oder die IP-Adresse kann anderweitig vergeben werden.

Mit DHCP kann ein mobiler Rechner ohne manuelle Konfiguration in ein Netzwerk eingebunden werden. Als Voraussetzung muss lediglich ein DHCP-Server zur Verfügung stehen. Ein mobiler Rechner kann so Dienste des lokalen Netzwerkes benutzen und beispielsweise zentral abgelegte Dateien benutzen. Bietet ein mobiler Rechner jedoch selbst Dienste an, kann ein potentieller Dienstnutzer den mobilen Rechner nicht auffinden, da sich dessen IP-Adresse in jedem Netzwerk, in das der mobile Rechner eingebunden wird, ändert. Das gleiche geschieht, wenn sich eine IP-Adresse während einer bestehenden TCP-Verbindung ändert. Dies führt zum Abbruch der Verbindung. Daher bekommt bei Mobile-IP ein mobiler Rechner eine IP-Adresse zugewiesen, die er auch in einem anderen Netzwerk behält. Bei herkömmlichem IP-Netzwechsel ist es nötig, die IP Adressen-Einstellungen entsprechend anzupassen. Eine ständige Anpassung von IP- und Routing-Konfigurationen auf dem Endgerät ist jedoch manuell fast unmöglich. Bei den herkömmlichen automatischen Konfigurationsmechanismen wird die bestehende Verbindung bei einem Wechsel der IP-Adresse unterbrochen. Das MIP-Protokoll (RFC 2002, RFC 2977, RFC3344, RFC3846, RFC3957, RFC3775, RFC3776, RFC4285) unterstützt die Mobilität von mobilen Endgeräten. Bei den herkömmlichen IP-Protokollen muss das mobile Endgerät jedes Mal seine IP-Adresse anpassen, wenn es das IP-Subnetz wechselt, damit die an das mobile Endgerät adressierten Datenpakete richtig geroutet werden. Um eine bestehende TCP-Verbindung aufrecht zu erhalten, muss das mobile Endgerät seine IP-Adresse beibehalten, da ein Adressenwechsel zu einer Unterbrechung der Verbindung führt. Das MIP-Protokoll hebt diesen Konflikt auf, indem es einem mobilen Endgerät bzw. einem Mobile Node (MN) erlaubt, zwei IP-Adressen zu besitzen. Das MIP-Protokoll ermöglicht eine transparente Verbindung zwischen den beiden Adressen, nämlich einer permanenten Home-Adresse und einer zweiten temporären Care-Of-Adresse. Die Care-Of-Adresse ist die IP-Adresse, unter der das mobile Endgerät aktuell erreichbar ist.

Ein Heimagent (Home Agent) ist ein Stellvertreter des mobilen Endgerätes, solange sich das mobile Endgerät nicht in dem ursprünglichen Heimnetz aufhält. Der Heimagent ist ständig über den aktuellen Aufenthaltsort des mobilen Rechners informiert. Der Heimagent stellt üblicherweise eine Komponente eines Routers im Heimnetz des mobilen Endgerätes dar. Wenn das mobile Endgerät sich außerhalb des Heimnetzes befindet, stellt der Heimagent eine Funktion bereit, damit sich das mobile Endgerät anmelden kann. Dann leitet der Heimagent die an das mobile Endgerät adressierten Datenpakete in das aktuelle Subnetz des mobilen Endgerätes weiter.

Ein Fremdagent (Foreign Agent) befindet sich in dem Subnetz, in dem sich das mobile Endgerät bewegt. Der Fremdagent leitet eingehende Datenpakete an das mobile Endgerät bzw. an den mobilen Rechner weiter. Der Fremdagent befindet sich in einem so genannten Fremdnetz (Visited Network). Der Fremdagent stellt ebenfalls üblicherweise eine Komponente eines Routers dar. Der Fremdagent routet alle administrativen Mobile-Datenpakete zwischen dem mobilen Endgerät und dessen Heimagenten. Der Fremdagent entpackt die von dem Heimagent gesendeten, getunnelten IP-Datenpakete und leitet deren Daten an das mobile Endgerät weiter.

Die Heimadresse des mobilen Endgerätes ist die Adresse, unter der das mobile Endgerät permanent erreichbar ist. Die Heimadresse hat dasselbe Adressenpräfix wie der Heimagent. Die Care-Of-Adresse ist diejenige IP-Adresse, die das mobile Endgerät in dem fremden Netz verwendet.

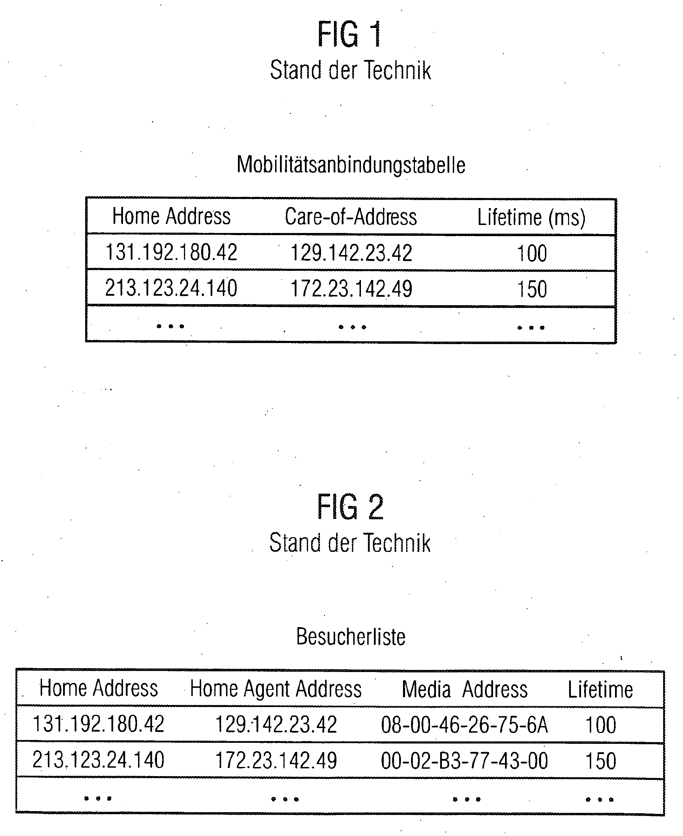

Der Heimagent pflegt eine so genannte Mobilitätsanbindungstabelle (MBT: Mobility Binding Table). Die Einträge in dieser Tabelle dienen dazu, die beiden Adressen, d.h. die Heimadresse und die Care-Of-Adresse, eines mobilen Endgeräts einander zuzuordnen und die Datenpakete entsprechend umzuleiten. Die MBT-Tabelle enthält Einträge über die Heimadresse, die Care-Of-Adresse und eine Angabe über die Zeitspanne, in der diese Zuordnung gültig ist (Life Time). Figur 1 zeigt ein Beispiel für eine Mobilitätsanbindungstabelle nach dem Stand der Technik.

Der Fremdagent (FA) enthält eine Besucherliste bzw. Visitor List (VL: Visitor List), die Informationen über die mobilen Endgeräte enthält, die sich gerade in dem IP-Netz des Fremdagenten befinden. Figur 2 zeigt ein Beispiel für eine derartige Besucherliste nach dem Stand der Technik.

Damit ein mobiler Rechner in ein Netz eingebunden werden kann, muss er zunächst in Erfahrung bringen, ob er sich in seinem Heim- oder einem Fremdnetz befindet. Zusätzlich muss das mobile Endgerät in Erfahrung bringen, welcher Rechner in dem Subnetz der Heim- bzw. der Fremdagent ist. Diese Informationen werden durch so genanntes Agent Discovery ermittelt.

Durch die nachfolgende Registrierung kann das mobile Endgerät seinen aktuellen Standort seinem Heimagenten mitteilen. Hierzu sendet der mobile Rechner bzw. das mobile Endgerät dem Heimagenten die aktuelle Care-Of-Adresse zu. Zur Registrierung sendet der mobile Rechner einen Registration-Request bzw. eine Registrierungsanforderung an den Heimagenten. Der Heimagent (HA) trägt die Care-Of-Adresse in seine Liste ein und antwortet mit einem Registration Reply bzw. einer Registrierungsantwort. Hierbei besteht allerdings ein Sicherheitsproblem. Da prinzipiell jeder Rechner an einen Heimagenten eine Registrierungsanforderung schicken kann, könnte man auf einfache Weise einem Heimagenten vorspiegeln, ein Rechner habe sich in ein anderes Netzwerk bewegt. So könnte ein fremder Rechner alle Datenpakete eines mobilen Rechners bzw. mobilen Endgerätes übernehmen, ohne dass ein Sender davon erfährt. Um dies zu verhindern, verfügen der mobile Rechner und der Heimagent über gemeinsame geheime Schlüssel. Kehrt ein mobiler Rechner in sein Heimatnetzwerk zurück, deregistriert er sich beim Heimagenten, da der mobile Rechner nunmehr alle Datenpakete selbst entgegennehmen kann. Ein mobiles Funknetz muss unter Anderem folgende Sicherheitseigenschaften aufweisen. Informationen dürfen nur für gewünschte Kommunikationspartner zugänglich gemacht werden, d.h. nicht gewünschte Mithörer dürfen keinen Zugriff auf übertragene Daten erhalten. Das mobile Funknetz muss also die Eigenschaft der Vertraulichkeit (Confidentiality) aufweisen. Daneben muss Authentizität gegeben sein. Die Authentizität (Authenticity) erlaubt es einem Kommunikationspartner zweifelsfrei festzustellen, ob eine Kommunikation tatsächlich zu einem gewünschten Kommunikationspartner aufgebaut wurde oder ob sich eine fremde Partei als Kommunikationspartner ausgibt. Authentifizierungen können pro Nachricht oder pro Verbindung durchgeführt werden. Wird auf Basis von Verbindungen authentifiziert, wird nur einmal zu Anfang einer Sitzung (Session) der Kommunikationspartner identifiziert. Man geht dann für den weiteren Verlauf der Sitzung davon aus, dass die folgenden Nachrichten weiterhin von dem entsprechenden Sender stammen. Selbst wenn die Identität eines Kommunikationspartners feststeht, d.h. der Kommunikationspartner authentifiziert ist, kann der Fall auftreten, dass dieser Kommunikationspartner nicht auf alle Ressourcen zugreifen darf bzw. nicht alle Dienste über das Netzwerk benutzen darf. Eine entsprechende Autorisation setzt in diesem Fall eine vorhergehende Authentifizierung des Kommunikationspartner voraus.

Bei mobilen Datennetzen müssen Nachrichten längere Strecken über Luftschnittstellen zurücklegen und sind somit für potentielle Angreifer leicht erreichbar. Bei mobilen und drahtlosen Datennetzen spielen daher Sicherheitsaspekte eine besondere Rolle. Ein wesentliches Mittel zur Erhöhung der Sicherheit in Datennetzwerken stellen Verschlüsselungstechniken dar. Durch die Verschlüsselung ist es möglich, Daten über unsichere Kommunikationswege, beispielsweise über Luftschnittstellen übertragen, ohne dass unbefugte Dritte Zugriff auf die Daten erlangen. Zum Verschlüsseln werden die Daten, d.h. der so genannte Klartext mit Hilfe eines Verschlüsselungsalgorithmus in Chiffre-Text transformiert. Der verschlüsselte Text kann über den unsicheren Datenübertragungskanal transportiert und anschließend entschlüsselt bzw. dechiffriert werden.

Als eine viel versprechende drahtlose Zugangstechnologie wird WiMax (Worldwide Interoperability for Microwave Access) als neuer Standard vorgeschlagen, der für die Funkübertragung IEEE 802.16 verwendet. Mit WiMax sollen mit Sendestationen ein Bereich von bis zu 50km mit Datenraten von über 100 Mbit pro Sekunde versorgt werden.

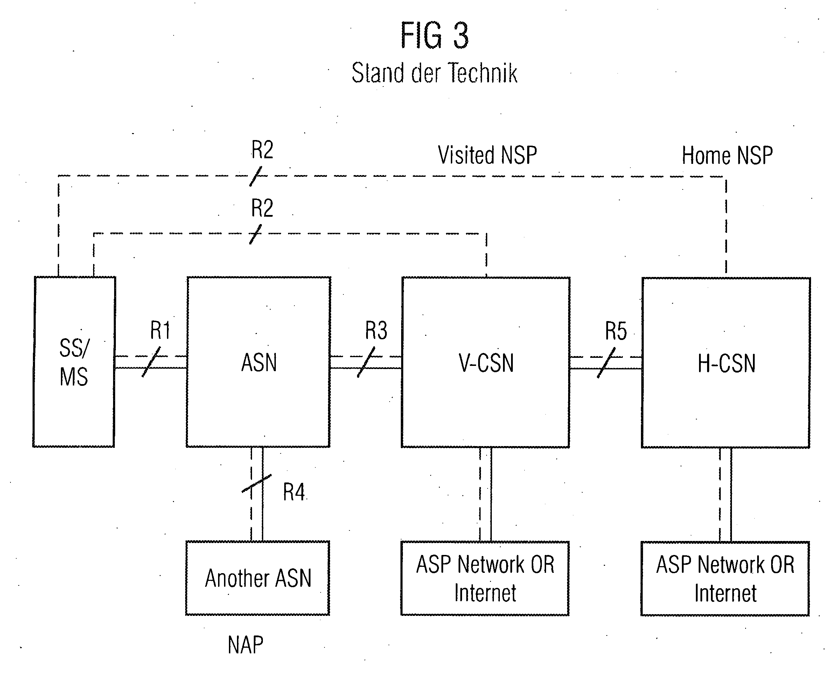

Figur 3 zeigt ein Referenzmodel für ein WiMax-Funknetzwerk. Ein mobiles Endgerät MS befindet sich im Bereich eines Zugangsnetzwerkes (ASN: Access Serving Network). Das Zugangsnetz ASN ist über mindestens ein besuchtes Netz (Visited Connectivity Service Network VCSN) bzw. Zwischennetz mit einem Heimnetz HCSN (Home Connectivity Service Network) verbunden. Die verschiedenen Netzwerke sind über Schnittstellen bzw. Referenzpunkte R miteinander verbunden. Der Heimagent HA der Mobilstation MS befindet sich in dem Heimnetz HCSN oder in einem der besuchten Netze VCSN.

WiMax unterstützt zwei Realisierungsvarianten von Mobile IP, so genanntes Client MIP (CMIP), bei dem die Mobilstation selbst die MIP-Clientfunktion realisiert, und Proxy-MIP (PMIP), bei dem die MIP-Client-Funktion durch das WiMax-Zugangsnetz realisiert ist. Die dazu im ASN vorgesehene Funktionalität wird als Proxy Mobile Node (PMN) oder als PMIP-Client bezeichnet. Dadurch kann MIP auch mit Mobilstationen verwendet werden, die selbst kein MIP unterstützen.

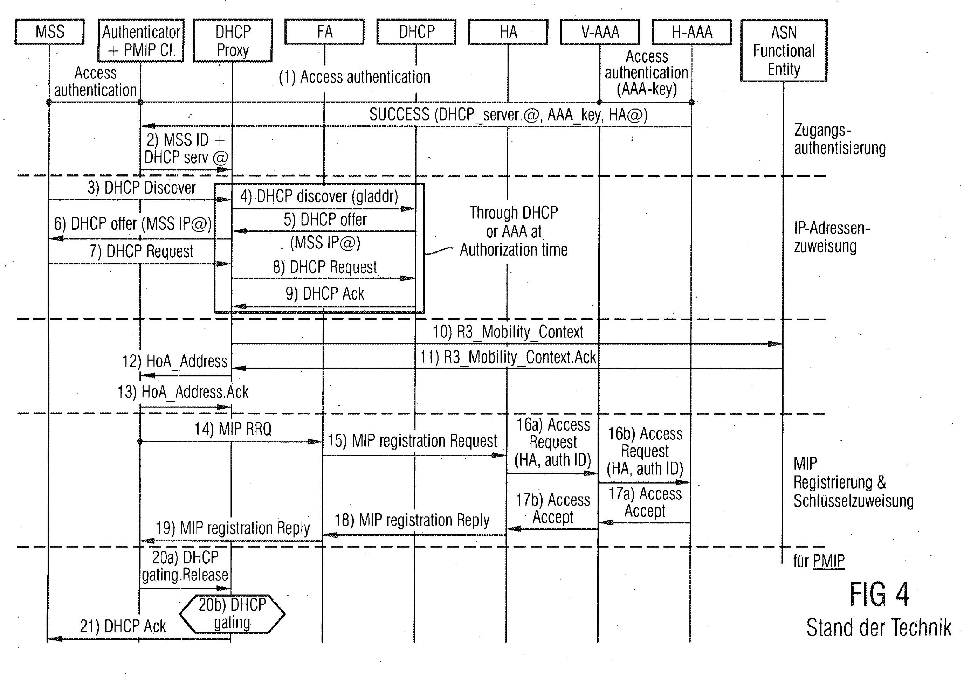

Figur 4 zeigt den Verbindungsaufbau bei Proxy-MIP (PMIP), wenn sich der Heimagent in dem besuchten Netzwerk befindet nach dem Stand der Technik.

Nach Aufbau einer Funkverbindung zwischen dem mobilen Endgerät und einer Basisstation erfolgt zunächst eine Zugangsauthentisierung. Die Funktion der Authentisierung, der Autorisation und der Buchhaltung erfolgt mittels so genannter AAA-Servern (AAA: Authentication Authorization and Accounting). Zwischen dem mobilen Endgerät MS und dem AAA-Server des Heimnetzes (HAAA) werden Authentisierungsnachrichten ausgetauscht mittels der die Adresse des Heimagenten und ein Authentisierungsschlüssel gewonnen werden. Der Authentisierungsserver im Heimnetz enthält die Profildaten des Teilnehmers. Der AAA-Server erhält eine Authentisierungsanfragenachricht, die eine Teilnehmeridentität des mobilen Endgerätes enthält. Der AAA-Server generiert nach erfolgreicher Zugangsauthentisierung einen MSK-Schlüssel (MSK: Master Session Key) zum Schutz der Datenübertragungsstrecke zwischen dem mobilen Endgerät MS und der Basisstation des Zugangsnetzwerkes ASN. Dieser MSK-Schlüssel wird von dem AAA-Server des Heimnetzes über das Zwischennetz CSN an das Zugangsnetzwerk ASN übertragen.

Nach der Zugangsauthentisierung wird, wie in Figur 4 zu sehen, der DHCP-Proxy-Server im Zugangsnetzwerk ASN konfiguriert. Falls die IP-Adresse und Host-Konfiguration bereits in der AAA-Antwortnachricht enthalten ist, wird die gesamte Information in den DHCP-Proxy-Server heruntergeladen.

Nach erfolgreicher Authentisierung und Autorisierung sendet die Mobilstation bzw. das mobile Endgerät MS eine DHCP Discovery Nachricht und es erfolgt eine IP-Adressenzuweisung.

Wird ein mobiles Endgerät in ein Netz eingebunden, muss das mobile Endgerät möglicherweise in Erfahrung bringen können, ob es sich in einem Heim- oder in einem Fremdnetz befindet. Weiterhin muss das mobile Endgerät in Erfahrung bringen, welcher Rechner in dem jeweiligen Netz der Heim- bzw. der Fremdagent ist. Diese Informationen werden durch das so genannte Agent Discovery ermittelt. Es gibt zwei Arten von Agent Discovery, nämlich so genannte Agent Advertisement und das Agent Solicitation.

Bei dem Agent Advertisement senden die Agenten, d. h. die Heim- oder Fremdagenten, periodisch Broadcast-Nachrichten an alle Rechner bzw. mobilen Endgeräte des Subnetzes. Jeder Rechner, der in einem bestimmten Zeitraum die Broadcast-Nachrichten abhört, kann so die Agenten im jeweiligen Subnetz identifizieren.

Wird ein mobiles Endgerät neu aktiviert, ist es im Allgemeinen nicht praktisch, auf das nächste Agent Advertisement zu warten. Das mobile Endgerät muss sofort wissen, in welchem Sübnetz es sich gerade befindet. Beim so genannten Agent Solicitation sendet daher das mobile Endgerät eine Aufforderung an alle Rechner des jeweiligen Subnetzes, ein Agent Advertisement durchzuführen. Das mobile Endgerät kann durch Agent Solicitation erzwingen, dass sich die Agenten sofort zu erkennen geben, sodass sich die Wartezeit erheblich verkürzt. Agent Solicitation wird auch dann durchgeführt, wenn ein Agent Advertisement ausbleibt, beispielsweise bei Packet Loss oder Netzwechsel. Mit Hilfe des Agent Discovery kann ein mobiles Endgerät auch feststellen, ob es sich in seinem Heimnetz oder in einem Fremdnetz befindet. Anhand der Paketinformation innerhalb einer Agent Advertisement-Nachricht erkennt das mobile Endgerät seinen Heimagenten. Bekommt das mobile Endgerät Nachrichtenpakete von einem Fremdnetz, so kann es zusätzlich feststellen, ob sich sein Standort seit dem letzten Advertisement verändert hat. Empfängt das mobile Endgerät keine Advertisement-Nachricht, geht das mobile Endgerät zunächst davon aus, dass es sich in dem Heimnetz befindet und der Heimagent gestört ist. Das mobile Endgerät versucht dann mit dem Router des Netzwerks Kontakt aufzunehmen, um diese Annahme zu bestätigen. Befindet sich das mobile Endgerät nicht in seinem Heimnetz, versucht es daraufhin, einen DHCP-Server zu erreichen und eine Adresse des Subnetzes zu erhalten. Ist dies erfolgreich, benutzt das mobile Endgerät diese Adresse als so genannte Colocated Care-of-Adresse und nimmt mit dem Heimagenten Kontakt auf. Die Colocated Care-of-Adresse ist eine dem mobilen Endgerät im Fremdnetz zugewiesene Adresse, die auch an den Heimagenten übermittelt wird.

Man unterscheidet zwischen netzbasiertem Mobilitätsmanagement (PMIP) und endgerätebasiertem Mobilitätsmanagement (CMIP). Beim endgerätebasierten Mobilitätsmanagement CMIP unterstützt das Endgerät Mobile-IP (MIP).

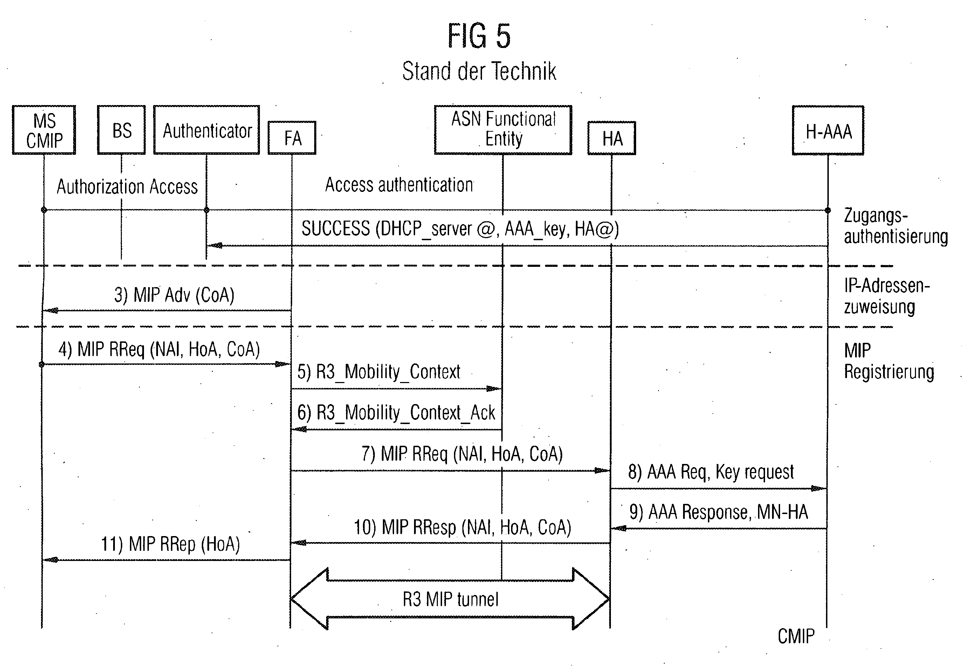

Figur 4 zeigt den Verbindungsaufbau bei einem herkömmlichen netzbasierten Mobilitätsmanagement (PMIP), während die Figur 5 den Verbindungsaufbau bei einem herkömmlichen endgerätebasierten Mobilitätsmanagement (CMIP) darstellt.

Beim Aufbau einer Verbindung zwischen dem mobilen Endgerät und dem Netz sendet der Authentisierungsserver des Heimnetzes (H-AAA) nach erfolgreicher Authentisierung des Teilnehmers eine Authentisierungsbestätigungsnachricht (SUCCESS). Die Authentisierungsbestätigungsnachricht meldet dem Authentisierungs-Client, dass die Authentisierung des Teilnehmers erfolgreich abgeschlossen wurde. Beim Proxy-MIP bzw. netzbasierten Mobilitätsmanagement (PMIP) unterstützt das mobile Endgerät Mobile-IP nicht bzw. die entsprechende MIP-Software ist in dem mobilen Endgerät nicht aktiviert. Demgegenüber wird beim Client-MIP (CMIP) bzw. beim endgerätebasierten Mobilitätsmanagement Mobile-IP von dem jeweiligen Endgerät bzw. der Mobile Station MS unterstützt. Beim Proxy-MIP erkennt das mobile Endgerät nur eine vom DHCP-Server zugewiesene IP-Adresse. Die Care-of-Adresse des mobilen Endgerätes ist nicht dem mobilen Endgerät, sondern dem PMIP-Client, dem Fremdagenten sowie dem Heimagenten bekannt. Demgegenüber erkennt das mobile Endgerät beim Client-MIP seine beiden IP-Adressen, d. h. sowohl die Home Address als auch die Care-of-Adresse.

Wie in Figuren 4, 5 erkennbar, erfolgt nach der IP-Adressenzuweisung eine MIP-Registrierung. Bei der MIP-Registrierung wird der Heimagent über den aktuellen Standort des mobilen Endgerätes informiert. Zu seiner Registrierung sendet das mobile Endgerät bzw. der entsprechende PMIP-Client eine Registrierungsanforderung an einen Heimagenten, die die aktuelle Care-of-Adresse enthält. Der Heimagent trägt die Care-of-Adresse in eine von ihm verwaltete Liste ein und antwortet mit einer Registrierungsantwort (Registration Reply). Da prinzipiell jeder Rechner an einen Heimagenten eine Registrierungsanforderung schicken kann, könnte auf einfache Weise einem Heimagenten vorgespielt werden, ein Rechner bzw. ein mobiles Endgerät habe sich in ein anderes Netzwerk bewegt. Um dies zu verhindern, verfügt sowohl das mobile Endgerät als auch der Heimagent über einen gemeinsamen geheimen Schlüssel, nämlich einen so genannten MIP-Schlüssel.

Bei Proxy-MIP (PMIP) wird die Registrierungsanforderung MIPRRQ von einem PMIP-Client innerhalb des Zugangsnetzes über einen Fremdagenten an den Heimagenten HA übertragen. Der Heimagent HA lässt sich von dem zugehörigen Authentisierungsserver H-AAA einen Schlüssel für den Teilnehmer zuweisen und überträgt diesen mit der MIP-Registrierungsantwort (MIP Registration Reply), wie in Figur 4 dargestellt.

Bei endgerätebasiertem Mobilitätsmanagement (CMIP) wird die Registrierungsanfragenachricht (MIPRRQ) direkt von dem mobilen Endgerät MS über den Fremdagenten an den Heimagenten HA gerichtet, wie in Figur 5 dargestellt.

Bei endgerätebasiertem Mobilitätsmanagement (CMIP) muss ein gemeinsamer Mobilitätsschlüssel zur kryptographischen Sicherung von Mobilitätssignalisierungsnachrichten über das mobile Endgerät MS und dem Authentisierungsserver des Heimnetzes H-AAA generiert werden, der anschließend die Kommunikation zwischen dem mobilen Endgerät MS und dem Heimagenten sichert. Beim netzbasierten Mobilitätsmanagement PMIP muss ein gemeinsamer Mobilitätsschlüssel über den PMIP-Client und den Heimagenten HA durch einen Authentisierungsserver generiert werden. Bei einem herkömmlichen System wird ein netzbasiertes Mobilitätsmanagement PMIP (Proxy-MIP) nur dann eingesetzt, wenn das mobile Endgerät MS nicht ein endgerätebasiertes Mobilitätsmanagement CMIP unterstützt. Wenn nun das Heimnetz eines mobilen Endgerätes MS im Gegensatz zu dem mobilen Endgerät selbst keine Unterstützung für MIP anbietet, entstehen Probleme bei der MIP-Konfiguration des mobilen Endgerätes.

US 2004/213260 A1 ist auf ein Verfahren zum teilnehmerspezifischen Aktivieren eines netzbasierten Mobilitätsmanagements (Proxy-Mobile-IP) gerichtet und offenbart, dass ein Authentisierungsserver eines Teilnehmers nach erfolgreicher Authentisierung des Teilnehmers eine Authentisierungsbestätigungsnachricht an einen Authentisierungs-Client in einem Zugangsnetz (WLAN) sendet.

Daher ist es die Aufgabe der vorliegenden Erfindung, ein Verfahren und einen Authentisierungsserver zu schaffen, bei dem der Netzbetreiber vollständige Kontrolle über das Mobilitätsmanagement in seinem Netz erhält und Konfigurationsprobleme bei der MIP-Konfiguration von mobilen Endgeräten vermieden werden.

Diese Aufgabe wird erfindungsgemäß durch ein Verfahren mit den im Patentanspruch 1 angegebenen Merkmalen gelöst.

Die Erfindung schafft ein Verfahren zum teilnehmerspezifischen Aktivieren eines netzbasierten Mobilitätsmanagements (PMIP),
bei dem ein Authentisierungsserver eines Teilnehmers nach erfolgreicher Authentisierung des Teilnehmers eine Authentisierungsbestätigungsnachricht (SUCCESS) an einen Authentisierungs-Client in einem Zugangsnetz (ASN) sendet, wobei die Authentisierungsbestätigungsnachricht (SUCCESS) ein Aktivierungsattribut (PMIP_ONLY) zum Aktivieren eines netzwerkbasierten Mobilitätsmanagements (PMIP) enthält, wenn der Authentisierungsserver keinen gemeinsamen Mobilitätsschlüssel für ein endgerätebasiertes Mobilitätsmanagement (CMIP) bereitstellt.

Die Grundidee des erfindungsgemäßen Verfahrens besteht darin, ein netzbasiertes Mobilitätsmanagement (PMIP) zu erzwingen selbst wenn das mobile Endgerät MS ein endgerätebasiertes Mobilitätsmanagement (CMIP) unterstützt.

Hierdurch erhält der Betreiber eines Connectivity Service Networks (CSN) eine vollständige Kontrolle über das Makromobilitätsmanagement in seinem Netz.

Bei einer bevorzugten Ausführungsform des erfindungsgemäßen Verfahrens befindet sich der Authentisierungsserver in einem Heimnetz des Teilnehmers.

Bei einer weiteren bevorzugten Ausführungsform des erfindungsgemäßen Verfahrens überträgt der Authentisierungsserver die Authentisierungsbestätigungsnachricht (SUCCESS) an ein Gateway des Zugangsnetzes, welches den Authentisierungs-Client enthält.

Bei einer bevorzugten Ausführungsform des erfindungsgemäßen Verfahrens wird das Aktivierungsattribut (PMIP_ONLY) durch ein Flag gebildet, welches durch den Authentisierungsserver gesetzt wird.

Bei einer bevorzugten Ausführungsform des erfindungsgemäßen Verfahrens enthält die Authentisierungsbestätigungsnachricht (SUCCESS) ferner einen MSK-Schlüssel, eine DHCP-Server-adresse, eine Heimagentenadresse und einen Abrechnungsidentifizierer (CUI).

Bei einer bevorzugten Ausführungsform des erfindungsgemäßen Verfahrens wird das übertragene Aktivierungsattribut (PMIP_ONLY) in dem Gateway des Zugangsnetzes zwischengespeichert, wobei dem jeweiligen Aktivierungsattribut (PMIP_ONLY) das jeweilige mobile Endgerät (MS) des Teilnehmers zugeordnet wird.

Bei einer bevorzugten Ausführungsform des erfindungsgemäßen Verfahrens veranlasst der Authentisierungs-Client den Fremdagenten (FA) in dem Zugangsnetz (ASN) dazu, keine Advertisement-Nachrichten an das mobile Endgerät (MS) eines Teilnehmers zu senden, wenn das zugehörige zwischengespeicherte Aktivierungsattribut (PMIP_ONLY) gesetzt ist, um ein endgerätebasiertes Mobilitätsmanagement (CMIP) zu dem jeweiligen Teilnehmer zu deaktivieren.

Der Fremdagent (FA) antwortet vorzugsweise auch nicht auf eine Solicitation-Nachricht

Bei einer bevorzugten Ausführungsform des erfindungsgemäßen Verfahrens wird das Aktivierungsattribut (PMIP_ONLY) durch den Authentisierungsserver ferner gesetzt, wenn ein Netzwerkzugriffsidentifizierer (NAI) des Teilnehmers nicht eindeutig ist.

Bei einer weiteren Ausführungsform des erfindungsgemäßen Verfahrens wird das Aktivierungsattribut (PMIP_ONLY) durch den Authentisierungsserver ferner gesetzt, wenn ein Netzwerkzugriffsidentifizierer (NAI) des Teilnehmers angibt, dass ein WiMax-spezifisches Mobile-IP durch das mobile Endgerät des Teilnehmers oder durch das Heimnetz des Teilnehmers nicht unterstützt wird.

Bei einer bevorzugten Ausführungsform des erfindungsgemäßen Verfahrens wird das Heimnetz durch ein 3GPP-Netz, ein 3GPP2-Netz, ein WLAN-Netz oder ein WiMax-Netz gebildet.

Bei einer bevorzugten Ausführungsform des erfindungsgemäßen Verfahrens wird das Zugangsnetz (ASN) durch ein WiMax-Netz gebildet.

Die Erfindung schafft ferner einen Authentisierungsserver zum teilnehmerspezifischen Aktivieren eines netzbasierten Mobilitätsmanagements,
bei dem der Authentisierungsserver nach erfolgreicher Authentisierung eines Teilnehmers eine Authentisierungsbestätigungsnachricht (SUCCESS) an einen Authentisierungs-Client in einem Zugangsnetz (ASN) sendet, wobei die Authentisierungsbestätigungsnachricht ein Aktivierungsattribut (PMIP_ONLY) zum Aktivieren eines netzbasierten Mobilitätsmanagements (PMIP) enthält, wenn der Authentisierungsserver keinen gemeinsamen Mobilitätsschlüssel für ein endgerätebasiertes Mobilitätsmanagement (CMIP) bereitstellt.

Nach Abschluss des in Figur 4 dargestellten Verbindungsaufbaus hat das mobile Endgerät eine Heimadresse erhalten und ist bei dem Heimatagenten registriert.

Im Weiteren werden bevorzugte Ausführungsformen des erfindungsgemäßen Verfahrens und des erfindungsgemäßen Authentisierungs-Proxy-Servers unter Bezugnahme auf die beigefügten Figuren zur Erläuterung erfindungswesentlicher Merkmale beschrieben. Es zeigen:
- Figur 1: ein Beispiel für eine Mobilitätsanbindungstabelle nach dem Stand der Technik;
- Figur 2: ein Beispiel für eine Besucherliste nach dem Stand der Technik;
- Figur 3: eine Referenznetzwerkstruktur für ein WiMax-Funknetz;
- Figur 4: einen PMIP-Verbindungsaufbau bei einem herkömmlichen Netz nach dem Stand der Technik;
- Figur 5: einen CMIP-Verbindungsaufbau bei einem herkömmlichen Netz nach dem Stand der Technik;
- Figur 6: eine Netzstruktur gemäß einer bevorzugten Ausführungsform des erfindungsgemäßen Verfahrens;
- Figur 7: ein Ablaufdiagramm zur Erläuterung der Funktionsweise einer möglichen Ausführungsform des erfindungsgemäßen Verfahrens;
- Figur 8: eine Tabelle, die innerhalb eines Gateways zur Verwendung bei dem erfindungsgemäßen Verfahren abgespeichert ist;
- Figuren 9a, 9b: Diagramme zur Erläuterung der Funktionsweise des erfindungsgemäßen Verfahrens;

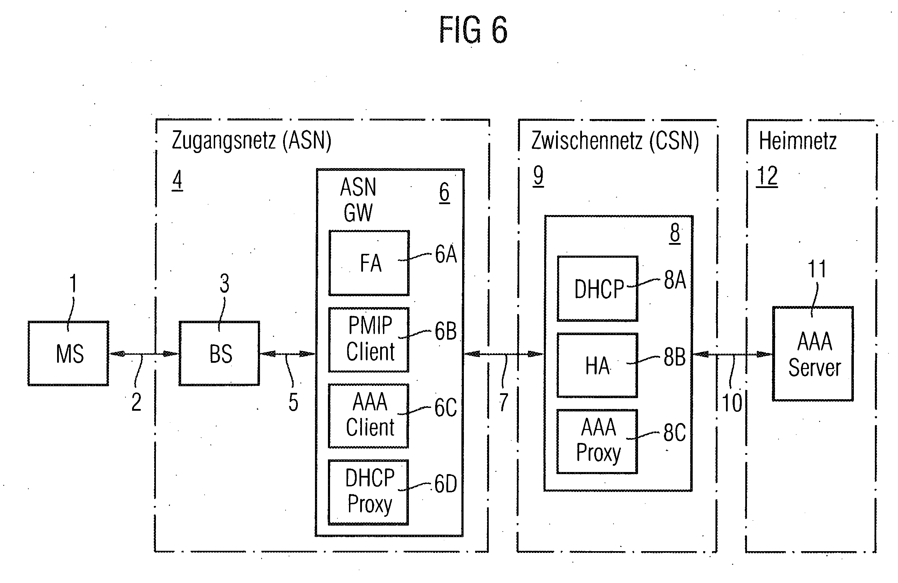

Wie man aus Figur 6 erkennen kann ist ein mobiles Endgerät 1 über eine drahtlose Schnittstelle 2 mit einer Basisstation 3 eines Zugangsnetzes 4 verbunden. Bei dem mobilen Endgerät 1 handelt es sich um ein beliebiges mobiles Endgerät, beispielsweise einen Laptop, einen PDA, ein Mobiltelefon, oder ein sonstiges mobiles Endgerät. Die Basisstation 3 des Zugangsnetzes 4 ist über eine Datenübertragungsleitung 5 mit einem Zugangsnetzwerk-Gateway 6 verbunden. In dem Zugangs-Gateway-Rechner 6 sind vorzugsweise weitere Funktionalitäten integriert, insbesondere ein Fremdagent 6A, ein PMIP-Client 6B, ein AAA-Client-Server 6C und ein DHCP-Proxy-Server 6D. Der Fremdagent 6A ist ein Router, der Routing-Dienste für das mobile Endgerät 1 zur Verfügung stellt. Die an das mobile Endgerät 1 gerichteten Datenpakete werden getunnelt übertragen und von dem Fremdagenten 6A entpackt.

Das Gateway 6 des Zugangsnetzes 4 ist über eine Schnittstelle 7 mit einem Rechner 8 eines Zwischennetzes 9 verbunden. Der Rechner 8 enthält einen DHCP-Server 8A, einen Heimagenten 8B und einen AAA-Proxy-Server 8C. Der Heimagent 8B ist der Stellvertreter des mobilen Endgerätes 1, wenn dieses sich nicht in seinem ursprünglichen Heimnetz befindet. Der Heimagent 8B ist ständig über den aktuellen Aufenthaltsort des mobilen Rechners 1 informiert. Datenpakete für das mobile Endgerät 1 werden zunächst an dem Heimagenten übertragen und von dem Heimagenten aus getunnelt an den Fremdagenten 6A weitergeleitet. Umgekehrt können Datenpakete, die von dem mobilen Endgerät 1 ausgesendet werden, direkt an den jeweiligen Kommunikationspartner gesendet werden. Die Datenpakete des mobilen Endgerätes 1 enthalten dabei die Heimadresse als Absenderadresse. Die Heimadresse hat dasselbe Adresspräfix, d.h. Netzadresse und Subnetzadresse, wie der Heimagent 8B. Datenpakete, die an die Heimadresse des mobilen Endgerätes 1 gesendet werden, werden von dem Heimagenten 8B abgefangen und getunnelt von dem Heimagenten 8B an die Care-of-Adresse des mobilen Endgerätes 1 übertragen und schließlich an dem Endpunkt des Tunnels, d.h. durch den Fremdagenten 6A oder das mobile Endgerät selbst empfangen.

Der Rechner 8 des Zwischennetzes 9 ist über eine weitere Schnittstelle 10 mit einem Authentisierungsserver 11 eines Heimnetzes 12 verbunden. Bei dem Heimnetz handelt es sich beispielsweise um ein 3GPP-Netz für UMTS. Bei einer alternativen Ausführungsform handelt sich bei dem Server 11 um einen Authentisierungsserver eines WLAN-Netzes. Der in Figur 5 dargestellte Authentisierungsserver 11 unterstützt keine MIP-Registrierung.

Es ist aus Netzbetreibersicht wünschenswert, stets oder teilnehmerspezifisch ein netzbasiertes Mobilitätsmanagement (PMIP) durchzuführen und bei der Übertragung der entsprechenden Authentisierungsbestätigungsnachricht (SUCCESS) ein Aktivierungsattribut zu übertragen, welches anzeigt, dass ein netzbasiertes Mobilitätsmanagement PMIP zu aktivieren ist. Das Aktivierungsattribut ist vorzugsweise ein Flag, welches durch den Authentisierungsserver 11 im Heimnetz 12 gesetzt wird und anschließend von dem Authentisierungsserver im Rahmen der Authentisierungsbestätigungsnachricht an das Gateway 6 am Zugangsnetz 4 übertragen wird. Die Authentisierungsbestätigungsnachricht (SUCCESS), welche von dem Authentisierungsserver 11 an das Gateway 6 übertragen wird, enthält neben dem Aktivierungsattribut PMIP_ONLY ferner vorzugsweise zusätzlich einen MSK-Schlüssel, eine DHCP-Serveradresse und eine Heimagentenadresse sowie beispielsweise einen Abrechnungsidentifizierer (CUI). Das Aktivierungsattribut (PMIP_ONLY) wird teilnehmerspezifisch durch den Authentisierungsserver 11 gesetzt, wenn der Authentisierungsserver 11 keinen gemeinsamen Mobilitätsschlüssel für ein endgerätebasiertes Mobilitätsmanagement CMIP für den jeweiligen Teilnehmer bereitstellen kann.

Das im Rahmen der Authentisierungsbestätigungsnachricht übertragene Aktivierungsattribut (PMIP_ONLY) wird vorzugsweise in einem Router bzw. in einem Gateway 6 des Zugangsnetzes 4 zwischengespeichert. Dabei wird dem jeweiligen Aktivierungsattribut PMIP_ONLY das jeweilige mobile Endgerät MS des Teilnehmers zugeordnet.

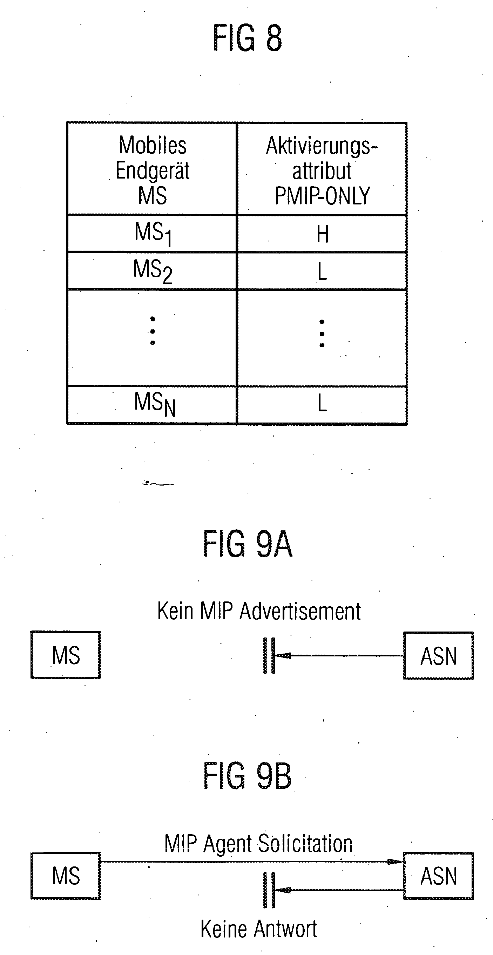

Figur 8 zeigt schematisch eine Tabelle, bei dem in verschiedenen mobilen Endgeräten bzw. Teilnehmern jeweils ein übertragenes Aktivierungsattribut PMIP_ONLY zugeordnet ist. Die in Figur 8 dargestellte Tabelle befindet sich innerhalb eines Speichers des Routers 6. Bei dem in Figur 8 dargestellten Beispiel ist beispielsweise für das mobile Endgerät MS1 das Aktivierungsattribut PMIP_ONLY gesetzt (H), während für ein weiteres mobiles Endgerät MS2 das Aktivierungsattribut PMIP_ONLY nicht gesetzt ist (L).

Bei einer alternativen Ausführungsform setzt der Authentisierungsserver 11 das in der Authentisierungsbestätigungsnachricht enthaltene Aktivierungsattribut ferner, wenn einer von ihm empfangener Netzwerkzugriffsidentifizierer NAI des Teilnehmers nicht eindeutig ist (beispielsweise user@vodafone.com). Dies kann beispielsweise durch eine Roaming-Vereinbarung zwischen den Netzwerkbetreibern festgelegt sein. In anderen Fällen ist dem Besuchernetz bekannt, dass mit manchen Heimnetzen Probleme bei der MIP-Unterstützung auftauchen, beispielsweise Heimnetze, die zwar prinzipiell MIP unterstützen, jedoch nicht exakt in einer von WiMax erwarteten Ausprägung, sodass Interoperabilitätsprobleme auftreten können. Ferner kann es möglich sein, dass zu lange Latenzzeiten oder eine Überlastung in der Kommunikation mit dem Heimnetz auftreten, beispielsweise wenn diese Heimnetze weit entfernt sind oder wenn diese Heimnetz nicht ausreichend freie Bandbreite für die Kommunikation zwischen dem besuchten Netz und dem Heimnetz zur Verfügung stellen können. In all diesen Fällen kann der Netzwerkbetreiber unabhängig davon, ob ein bestimmtes Heimnetz MIP unterstützt entsprechende Konfiguration durch das erfindungsgemäße Verfahren erzwingen, dass nur ein netzbasiertes Mobilitätsmanagement PMIP verwendet wird.

Bei einer Ausführungsform des erfindungsgemäßen Verfahrens wird das Aktivierungsattribut (PMIP_ONLY) durch den Authentisierungsserver 11 ferner gesetzt, wenn ein Netzwerkzugriffsidentifizierer NAI des Teilnehmers angibt, dass ein WiMax-spezifisches MIP durch das mobile Endgerät des Teilnehmers oder durch das Heimnetz des Teilnehmers nicht unterstützt wird.

Bei dem in Figur 6 dargestellten Heimnetz 12 kann es sich um ein 3GPP-Netz, ein 3GPP2-Netz, ein WLAN-Netz oder ein WiMax-Netz handeln.

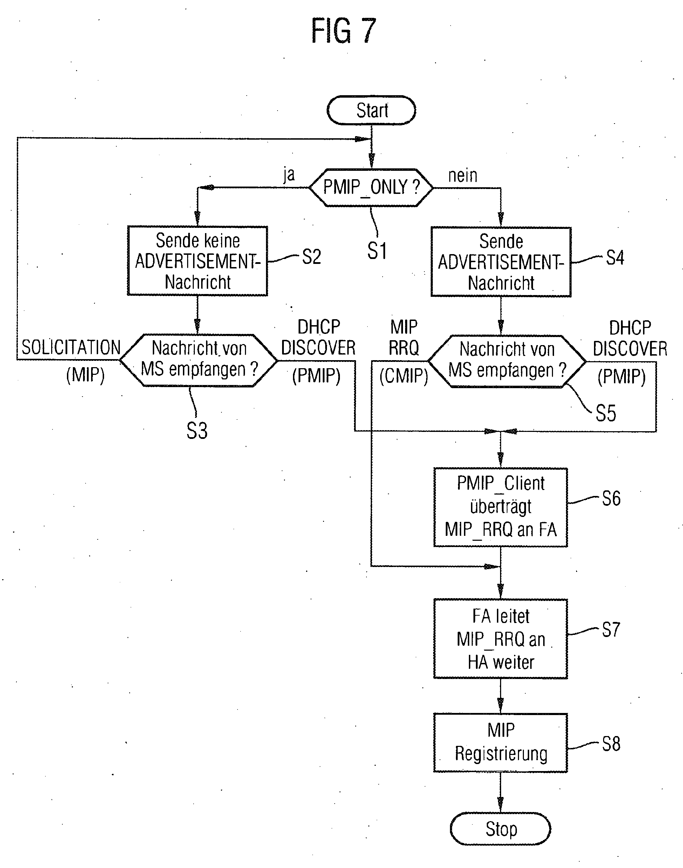

Figur 7 zeigt ein Ablaufdiagramm für einen innerhalb des ASN-Gateway 6 ablaufenden Vorgang gemäß der Erfindung. Das Gateway bzw. der Router 6 des Zugangsnetzes ASN enthält einen Fremdagenten 6A, einen PMIP-Client 6B, einen Authentisierungs-Client 6C sowie einen DHCP-Proxy-Server 6D. In einem Speicher des Gateways ist die in Figur 8 dargestellte Tabelle abgelegt. Für jedes mobile Endgerät MS1 ist ein Flag bzw. ein Aktivierungsattribut PMIP_ONLY gespeichert, welches angibt, ob ein netzbasiertes Mobilitätsmanagement PMIP für den jeweiligen Teilnehmer vorzunehmen ist.

In einem Schritt S1 überprüft der Router 6, ob das Aktivierungsflag für den jeweiligen Teilnehmer gesetzt ist oder nicht.

Ist dies der Fall, sendet der Router 6 über die zugehörige Base Station 3 keine Advertisement-Nachricht im Schritt S2 aus. Anschließend wartet das Gateway 6, ob es Nachrichten von dem zugehörigen Endgerät 1 im Schritt S3 empfängt. Erhält das Gateway 6 eine Solicitation-Nachricht reagiert es nicht und der Vorgang kehrt zu Schritt S1 zurück. Dies bedeutet, ein mobiles Endgerät 1, welches Mobile-IP unterstützt, erhält keine Antwort von dem Zugangsnetz. Hierdurch erzwingt das Zugangsnetz 4 die Verwendung eines netzbasierten Mobilitätsmanagements PMIP.

Wird im Schritt S1 festgestellt, dass das Aktivierungsattribut PMIP_ONLY für den jeweiligen Teilnehmer nicht gesetzt ist, sendet das Gateway 6 über die ausgebaute Funkverbindung bzw. das Link eine Advertisement-Nachricht an das mobile Endgerät S4.

Im Schritt S5 prüft der Router 6 bzw. das Gateway 6, welche Nachricht es von dem mobilen Endgerät 1 empfängt. Ist die empfangene Nachricht eine DHCP-Discover-Nachricht, liegt PMIP vor und der Vorgang wird mit Schritt S6 fortgeführt. Handelt es sich bei der Nachricht um eine PMIP-Registrierungsanforderung MIPRRQ, liegt CMIP vor und der Vorgang wird dann im Schritt S7 fortgesetzt. Im Schritt S6 überträgt der PMIP-Client 6B eine Registrierungsanforderung MIPRRQ an den Fremdagenten 6A.

Der Fremdagent 6A leitet im Schritt S7 die Registrierungsanforderung an den Heimagenten des Teilnehmers weiter, welcher sich in einem Zwischennetz 9 oder im Heimnetz 12 befindet.

Im Schritt S8 erfolgt die MIP-Registrierung, wie in Figuren 4, 5 dargestellt.

Figuren 9A, 9B zeigen schematisch die Vorgehensweise bei dem erfindungsgemäßen Verfahren.

Das ASN-Gateway 6 schickt nach Erhalt eines Aktivierungsattributs PMIP_ONLY keine Advertisement-Nachrichten an das jeweilige mobile Endgerät 1, wie in Figur 9A dargestellt.

Das ASN-Gateway 6 antwortet ferner nicht auf eine MIP-Agent-Solicitation-Nachricht von dem mobilen Endgerät 1, wenn in der in Figur 8 dargestellten Tabelle das zugehörige Aktivierungsattribut PMIP_ONLY gesetzt (H) ist.

Das Zugangsnetzwerk 4 verhält sich somit für das mobile Endgerät 1 bzw. den Teilnehmer so, als ob kein Foreign Agent in dem Zugangsnetz 4 vorhanden wäre.

Die Reaktion des Gateways 6 ist teilnehmerspezifisch. Beispielsweise wird nur Teilnehmern deren Heimnetz keine Mobile-IP-Unterstützung bietet, die CMIP-Funktionalität verwehrt bzw. gesperrt, während anderen Teilnehmern, die das gleiche Zugangsnetzwerk 4 benutzen, CMIP-Unterstützung angeboten wird.

## Patentansprüche

1. Verfahren zum teilnehmerspezifischen Aktivieren eines netzbasierten Mobilitätsmanagements,
bei dem ein Authentisierungsserver (11) eines Teilnehmers nach erfolgreicher Authentisierung des Teilnehmers eine Authentisierungsbestätigungsnachricht (SUCCESS) an einen Authentisierungs-Client (6C) in einem Zugangsnetz (4) sendet, wobei die empfangene Authentisierungsbestätigungsnachricht (SUCCESS) ein Aktivierungsattribut (PMIP_ONLY) zum Aktivieren eines netzbasierten Mobilitätsmanagements (PMIP) enthält, wenn der Authentisierungsserver (11) keinen gemeinsamen Mobilitätsschlüssel für ein endgerätebasiertes Mobilitätsmanagement (CMIP) bereitstellt.

2. Verfahren nach Anspruch 1,
wobei der Authentisierungsserver (11) sich in einem Heimatnetz (12) des Teilnehmers befindet oder durch einen Authentisierungsproxyserver (8C) gebildet wird, der sich in einem Zwischennetz (12) befindet.

3. Verfahren nach Anspruch 1,
wobei der Authentisierungsserver (11) die Authentisierungsbestätigungsnachricht (SUCCESS) an ein Gateway (6) des Zugangsnetzes (4) überträgt, welches den Authentisierungs-Client (6C) enthält.

4. Verfahren nach Anspruch 2,
wobei das Aktivierungsattribut (PMIP_ONLY) durch ein Flag gebildet wird, welches durch den Authentisierungsserver (11) gesetzt wird.

5. Verfahren nach Anspruch 1,
wobei die Authentisierungsbestätigungsnachricht (SUCCESS) ferner einen MSK-Schlüssel, eine DHCP-Server-Adresse, eine Heimagentenadresse und einen Abrechnungsidentifizierer (CUI) aufweist.

6. Verfahren nach Anspruch 1,
wobei das übertragene Aktivierungsattribut (PMIP_ONLY) in dem Gateway (6) des Zugangsnetzes (4) zwischengespeichert wird, wobei dem jeweiligen Aktivierungsattribut (PMIP_ONLY) das jeweilige mobile Endgerät (1) des Teilnehmers zugeordnet wird.

7. Verfahren nach Anspruch 6,
wobei der Authentisierungs-Client (6C) einen Fremdagenten (6A) in dem Zugangsnetz (4) dazu veranlasst keine Advertisement-Nachrichteln an das mobile Endgerät (1) eines Teilnehmers zu senden, wenn das zugehörige zwischengespeicherte Aktivierungsattribut (PMIP_ONLY) gesetzt ist, um ein endgerätebasiertes Mobilitätsmanagement (CMIP) für den jeweiligen Teilnehmer zu deaktivieren.

8. Verfahren nach Anspruch 6,
wobei der Authentisierungs-Client (6C) einen Fremdagenten (6A) in dem Zugangsnetz (4) dazu veranlasst, nicht auf Agent-Solicitation-Nachrichten des mobilen Endgeräts (1) eines Teilnehmers zu antworten, wenn das zugehörige zwischengespeicherte Aktivierungsattribut (PMIP_ONLY) gesetzt ist, um ein endgerätebasiertes Mobilitätsmanagement (CMIP) für den jeweiligen Teilnehmer zu deaktivieren.

9. Verfahren nach Anspruch 1,
wobei das Aktivierungsattribut (PMIP_ONLY) durch den Authentisierungsserver (11) ferner dann gesetzt wird, wenn ein Netzwerkzugriffsidentifizierer (NAI) des Teilnehmers nicht eindeutig ist.

10. Verfahren nach Anspruch 1,
wobei das Aktivierungsattribut (PMIP_ONLY) durch den Authentisierungsserver (11) ferner dann gesetzt wird, wenn ein Netzwerkzugriffsidentifizierer (NAI) des Teilnehmers angibt, dass eine WiMax-spezifische MIP durch das mobile Endgerät (1) des Teilnehmers oder durch ein Heimnetz (12) des Teilnehmers nicht unterstützt wird.

11. Verfahren nach Anspruch 2,
wobei das Heimnetz (12) durch ein 3GPP-Netz, ein 3GPP2-Netz, ein WLAN-Netz oder durch ein WiMax-Netz gebildet wird.

12. Verfahren nach Anspruch 1,
wobei das Zugangsnetz (4) durch ein WiMax-Netz gebildet wird.

13. Authentisierungsserver für ein teilnehmerspezifisches Aktivieren eines netzbasierten Mobilitätsmanagements, bei dem der Authentisierungsserver (11) ausgebildet ist, nach erfolgreicher Authentisierung eines Teilnehmers eine Authentisierungsbestätigungsnachricht (SUCCESS) an einen Authentisierungs-Client (6C) in einem Zugangsnetz (4) des Teilnehmers zu senden,
wobei die empfangene Authentisierungsbestätigungsnachricht (SUCCESS) ein Aktivierungsattribut (PMIP_ONLY) zum Aktivieren eines netzbasierten Mobilitätsmanagements (PMIP) enthält, wenn der Authentisierungsserver (11) keinen gemeinsamen Mobilitätsschlüssel für ein endgerätebasiertes Mobilitätsmanagement (CMIP) bereitstellt.

14. Authentisierungsserver nach Anspruch 13,
wobei der Authentisierungsserver (11) in einem Heimnetz (12) des Teilnehmers vorgesehen ist oder durch einen Authentisierungsproxyserver (8C) gebildet wird, der sich in einem Zwischennetz (12) befindet.

15. Authentisierungsserver nach Anspruch 14,
wobei das Heimnetz (12) ein 3GPP-Netz, ein 3GPP2-Netz, ein WLAN-Netz oder ein WiMax-Netz ist.

16. Authentisierungsserver nach Anspruch 13,
wobei das Zugangsnetz (4) ein WiMax-Netz ist.

## Claims

1. Method for subscriber-specific activation of network-based mobility management, in which an authentication server (11) of a subscriber sends an authentication confirmation message (SUCCESS) to an authentication client (6C) in an access network, after successful authentication of the subscriber, the received authentication confirmation message (SUCCESS) containing an activation attribute (PMIP_ONLY) for activating network-based mobility management (PMIP), if the authentication server (11) does not provide a common mobile key for terminal-based mobility management (CMIP).

2. Method according to claim 1, with the authentication server (11) being located in a home network (12) of the subscriber or being formed by an authentication proxy server (8C) which is located in an intermediate network (12).

3. Method according to claim 1, with the authentication server (11) transmitting the authentication confirmation message (SUCCESS) to a gateway (6) of the access network (4), which contains the authentication client (6C).

4. Method according to claim 2, with the activation attribute (PMIP_ONLY) being formed by a flag which is set by the authentication server (11).

5. Method according to claim 1, with the authentication confirmation message (SUCCESS) further comprising an MSK key, a DHCP server address, a home agent address and a billing identifier (CUI).

6. Method according to claim 1, with the transmitted activation attribute (PMIP_ONLY) being buffered in the gateway (6) of the access network (4), the respective mobile terminal (1) of the subscriber being assigned to the respective activation attribute (PMIP_ONLY).

7. Method according to claim 6, with the authentication client (6C) ensuring that a foreign agent (6A) in the access network (4) does not send advertisement messages to the mobile terminal (1) of a subscriber, if the associated buffered activation attribute (PMIP_ONLY) is set, in order to deactivate terminal-based mobility management (CMIP) for the respective subscriber.

8. Method according to claim 6, with the authentication client (6C) ensuring that a foreign agent (6A) in the access network (4) does not reply to agent solicitation messages of the mobile terminal (1) of a subscriber, if the associated buffered activation attribute (PMIP_ONLY) is set, in order to deactivate terminal-based mobility management (CMIP) for the respective subscriber.

9. Method according to claim 1, with the activation attribute (PMIP_ONLY) being further set by the authentication server (11), if a network access identifier (NAI) of the subscriber is not clear.

10. Method according to claim 1, with the activation attribute (PMIP_ONLY) being further set by the authentication server (11) if a network access identifier (NAI) of the subscriber indicates that a WiMax-specific MIP is not supported by the mobile terminal (1) of the subscriber or by a home network (12) of the subscriber.

11. Method according to claim 2, with the home network (12) being formed by a 3GPP network, a 3GPP2 network, a WLAN network or a WiMax network.

12. Method according to claim 1, with the access network (4) being formed by a WiMax network.

13. Authentication server for a subscriber-specific activation of network-based mobility management, in which the authentication server (11) is embodied to send an authentication confirmation message (SUCCESS) to an authentication client (6C) in an access network (4) of the subscriber, after successful authentication of a subscriber, the received authentication confirmation message (SUCCESS) containing an activation attribute (PMIP_ONLY) for activating network-based mobility management (PMIP), if the authentication server (11) does not provide a common mobile key for terminal-based mobility management (CMIP).

14. Authentication server according to claim 13, with the authentication server (11) being provided in a home network (12) of the subscriber or being formed by an authentication proxy server (8C) which is located in an intermediate network (12).

15. Authentication server according to claim 14, with the home network (12) being a 3GPP network, a 3GPP2 network, a WLAN network or a WiMax network.

16. Authentication server according to claim 13, with the access network (4) being a WiMax network.

## Revendications

1. Procédé destiné à l'activation, spécifique à l'abonné, d'une gestion de mobilité basée réseau,
dans lequel un serveur d'authentification (11) d'un abonné, après l'authentification réussie de l'abonné, émet un message de confirmation d'authentification (SUCCESS) à un client d'authentification (6C) se trouvant dans un réseau d'accès (4), le message de confirmation d'authentification (SUCCESS) reçu contenant un attribut d'activation (PMIP_ONLY) destiné à activer une gestion de mobilité (PMIP) basée réseau lorsque le serveur d'authentification (11) ne fournit aucune clé de mobilité commune pour une gestion de mobilité (CMIP) basée terminal.

2. Procédé selon la revendication 1,
le serveur d'authentification (11) se trouvant dans un réseau de rattachement (12) de l'abonné ou étant formé par un serveur proxy d'authentification (8C) qui se trouve dans un réseau intermédiaire (12).

3. Procédé selon la revendication 1,
le serveur d'authentification (11) transmettant le message de confirmation d'authentification (SUCCESS) à une passerelle (6) du réseau d'accès (4), lequel contient le client d'authentification (6C).

4. Procédé selon la revendication 2,
l'attribut d'activation (PMIP_ONLY) étant formé par un indicateur qui est mis par le serveur d'authentification (11).

5. Procédé selon la revendication 1,
le message de confirmation d'authentification (SUCCESS) présentant en outre une clé MSK, une adresse de serveur DHCP, une adresse d'agent local et un identificateur de facturation (CUI).

6. Procédé selon la revendication 1,
l'attribut d'activation transmis (PMIP_ONLY) étant mis en mémoire temporaire dans la passerelle (6) du réseau d'accès (4),
le terminal mobile respectif (1) de l'abonné étant affecté à l'attribut d'activation respectif (PMIP_ONLY).

7. Procédé selon la revendication 6,
le client d'authentification (6C) incitant un agent étranger (6A) se trouvant dans le réseau d'accès (4) à n'émettre aucun message de publicité au terminal mobile (1) d'un abonné lorsque l'attribut d'activation correspondant mémorisé temporairement (PMIP_ONLY) est mis, afin de désactiver une gestion de mobilité (CMIP) basée terminal pour l'abonné respectif.

8. Procédé selon la revendication 6,
le client d'authentification (6C) incitant un agent étranger (6A) se trouvant dans le réseau d'accès (4) à ne pas répondre à des messages de sollicitation d'agent du terminal mobile (1) d'un abonné lorsque l'attribut d'activation correspondant mémorisé temporairement (PMIP_ONLY) est mis, afin de désactiver une gestion de mobilité (CMIP) basée terminal pour l'abonné respectif.

9. Procédé selon la revendication 1,
l'attribut d'activation (PMIP_ONLY) étant mis en outre par le serveur d'authentification (11) lorsqu'un identificateur d'accès au réseau (NAI) de l'abonné n'est pas univoque.

10. Procédé selon la revendication 1,
l'attribut d'activation (PMIP_ONLY) étant mis en outre par le serveur d'authentification (11) lorsqu'un identificateur d'accès au réseau (NAI) de l'abonné indique qu'un MIP spécifique au WiMax n'est pas soutenu par le terminal mobile (1) de l'abonné ou par un réseau de rattachement (12) de l'abonné.

11. Procédé selon la revendication 2,
le réseau de rattachement (12) étant formé par un réseau 3GPP, un réseau 3GPP2, un réseau WLAN ou par un réseau WiMax.

12. Procédé selon la revendication 1,
le réseau d'accès (4) étant formé par un réseau WiMax.

13. Serveur d'authentification pour une activation spécifique à l'abonné d'une gestion de mobilité basée réseau,
dans lequel le serveur d'authentification (11) est réalisé pour émettre, après l'authentification réussie de l'abonné, un message de confirmation d'authentification (SUCCESS) à un client d'authentification (6C) se trouvant dans un réseau d'accès (4) de l'abonné,
le message de confirmation d'authentification (SUCCESS) reçu contenant un attribut d'activation (PMIP_ONLY) destiné à activer une gestion de mobilité (PMIP) basée réseau lorsque le serveur d'authentification (11) ne fournit aucune clé de mobilité commune pour une gestion de mobilité (CMIP) basée terminal.

14. Serveur d'authentification selon la revendication 13,
le serveur d'authentification (11) étant ménagé dans un réseau de rattachement (12) de l'abonné ou étant formé par un serveur proxy d'authentification (8C) qui se trouve dans un réseau intermédiaire (12).

15. Serveur d'authentification selon la revendication 14,
le réseau de rattachement (12) étant formé par un réseau 3GPP, un réseau 3GPP2, un réseau WLAN ou par un réseau WiMax.

16. Serveur d'authentification selon la revendication 13,
le réseau d'accès (4) étant formé par un réseau WiMax.
